# EUROPEAN PATENT SPECIFICATION

(11) **EP 2 373 176 B1**
(45) Date of publication and mention of the grant of the patent: **05.12.2012**
(21) Application number: 09796755.8
(22) Date of filing: 29.12.2009
(51) Int. Cl.: A23D 7/00, A23D 7/005, A23D 7/01

(54) **EMULSIFIED SPREAD BASED ON OLIVE OIL AND POSSIBLY OTHER VEGETABLE OILS AND METHOD FOR PREPARING IT**
EMULGIERTER AUFSTRICH AUF BASIS VON OLIVENÖL UND MÖGLICHERWEISE ANDEREN PFLANZLICHEN ÖLEN SOWIE VERFAHREN ZU SEINER HERSTELLUNG
PÂTE À TARTINER ÉMULSIFIÉE À BASE D'HUILE D'OLIVE ET ÉVENTUELLEMENT D'AUTRES HUILES VÉGÉTALES ET SON PROCÉDÉ DE PRÉPARATION

(30) Priority: 29.12.2008 ES 200803730
(43) Date of publication of application: 12.10.2011
(73) Proprietor: Gourmed Diet, S.L., 46023 Valencia (ES)
(72) Inventor: GARCIA SEGOVIA, Purificación, E-46022 Valencia (ES); ANDRÉS BELLO, Amparo, E-46022 Valencia (ES); MARTINEZ MONZÓ, Javier, E-46022 Valencia (ES); CHIRALT BOIX, Amparo, E-46022 Valencia (ES); LLOBELL SANCHIS, José, Daniel, E-46023 Valencia (ES); OLIVER CASTELLÓ, Francisco, E-46023 Valencia (ES)
(74) Representative: Carpintero Lopez, Francisco
(86) International application number: PCT/EP2009/067985
(87) International publication number: WO 2010/076318

(56) References cited:
- EP-A1- 1 336 340
- WO-A1-00/40095
- WO-A1-2006/048630
- US-A- 5 536 523
- US-A- 6 159 524
- US-A1- 2002 044 999
- US-A1- 2005 276 900

## Description

### Technical Field of the Invention

The present invention belongs to the field of food spreads, more specifically it relates to an emulsified spread based on olive oil that is not subjected to hydrogenation or hydroxylation, as well as to a method for preparing it. Optionally, the olive oil of the composition can be partially or totally substituted with any other vegetable oil. The spread of the present invention does not require cold storage.

### Background of the Invention

The consumption of olive oil involves an important source of monounsaturated fats. As a result, it can contribute to the prevention and treatment of the predominant risk factor of atherosclerosis as well as to the prevention of coronary heart disease and cancer.

Therefore olive oil is appreciated not only for its gastronomic value, but also for its curative and nutritional properties, identified since ancient times and scientifically proven after a number of epidemiological, clinical and experimental research works.

The balanced composition of olive oil, formed mainly by monounsaturated oleic acid, but with a suitable amount of essential polyunsaturated linoleic and linolenic acids, and the presence of a large variety of antioxidants, justifies the preference of nutrition specialists for olive oil, also shared by gastronomists due to its peculiar organoleptic characteristics, which are pleasant to the taste.

One of the main components that makes olive oil a product so beneficial for health is oleic acid, which is the main monounsaturated fatty acid of olive oil, as well as natural antioxidants. The substitution of saturated fatty acids, which increase bad cholesterol, with the monounsaturated fatty acids of olive oil allows reducing the total cholesterol and LDL (bad cholesterol) concentrations without reducing HDL (good cholesterol) levels.

Therefore it is desirable to promote and favor the consumption of olive oil to the detriment of other animal fats. A possible strategy for favoring the consumption of olive oil is to present it in a different format, in the form of a spread. Olive oil can thus be presented as an alternative to other fats but without trying to change consumption habits, but rather adapting the presentation form so that it can be consumed as a real alternative to other less healthy fats.

Manufacturing a spread with vegetable oils has, however, an important drawback, and it is that all vegetable oils are liquid at room temperature, including olive oil, and as of today there is not a natural source which offers vegetable fat with the consistency and plasticity suitable for being converted into a margarine spread.

Different alternatives for producing spreads from vegetable oils have been described up until now.

Patent ES 2087074 describes a spread based on soybean oil subjected to refining to obtain a very specific fatty acid composition. For the thickness of the composition, a cooling which causes phase inversion is carried out.

Patent ES 21128057 describes a spread based on vegetable oils subjected to hydrogenation and it presents a very specific fatty acid composition.

US 6113971 describes a method for preparing a butter based on olive oil comprising chemically transforming the olive oil by means of hydrogenation, a process by means of which part of the unsaturated fatty acids are converted in saturated fatty acids, thus achieving the plasticity sought. The product obtained by means of this method has the drawback that it does not preserve the same amount of monounsaturated fatty acids as natural olive oil does, therefore losing part of its healthy properties.

US 5536523 describes a spread with 35-80% of liquid oil, at least 16% of water, some emulsifiers and without any hydrogenated fats. Unaltered olive oil can be used as the liquid oil, but sucrose esters are not mentioned as possible emulsifiers.

Application ES 2168997 describes a method for obtaining an olive oil paste from stearin which is the solid fraction of olive oil. It is mixed with emulsifying agents and after a heat treatment and stirring it is left to cool to obtain a solid homogeneous paste.

Application ES 2162601 relates to the use of olive oil for the elaboration of margarines, butters, wheys, emulsions, creams, chocolates and the like. It specifically proposes substituting part of the vegetable oils typical of these products with olive oil.

The authors of the present invention have developed an alternative spread with a high proportion of olive oil preserving all the beneficial characteristics thereof. The product of the present invention has consistency and plasticity characteristics at room temperature that make it suitable as a spread for food use as a substitute for butters or margarines.

The versatility of the elaboration process allows partially or totally substituting the olive oil used in the elaboration of the spread with other vegetable oils. As is known, edible vegetable oils have a vital function in our organism and form one of the most important energy sources, which is essential for maintaining the balance of lipids, cholesterol and lipoproteins circulating in the blood; they provide vitamins A, D, E and K and essential oils that our organism is not capable of producing; and furthermore, they have the capacity of enhancing many of the sensory characteristics of foods, such as the taste, aroma and texture. Therefore it can also be of interest for the consumer to find spreads containing other vegetable fats such as sunflower, soybean, corn, rapeseed or canola, safflower, peanut, avocado or cottonseed fats. All these oils also have a lipid profile with a high content of polyunsaturated fatty acids (omega 6 series) and antioxidant substances such as tocopherols. The use of these oils in the elaboration of spreads broadens the color and taste range for this type of product.

### Description of the Invention

A first object of the present invention is an olive oil spread characterized in that it comprises between 70-85% olive oil, between 1-6% emulsifiers, between 0-2% thickeners and between 12.5-29% water, wherein the oil has not been subjected to any hydrogenation or hydroxylation treatment, and wherein the emulsifiers comprise at least sucrose esters.

In a preferred embodiment of the invention the spread comprises between 75-80% olive oil, 2-5% emulsifiers, 0.2-1% thickeners and between 15-20% water.

The main element of the emulsion is the olive oil, which furthermore acts as the dispersed phase of the emulsion. The olive oil used can be selected from virgin olive oil, extra virgin olive oil, refined olive oil, olive oil, olive-pomace oil or mixtures thereof.

In a particular embodiment of the invention, the spread is elaborated by substituting part of the olive oil with a vegetable oil. In the context of the present invention, the vegetable oils that can be included in the elaboration of the olive oil spread are selected from sunflower, soybean, corn, rapeseed or canola, safflower, peanut, avocado or cottonseed oils.

The emulsifiers or emulsifying agents have the function of favoring and facilitating the emulsion between the water (continuous phase) and the oil (dispersed phase) due to the fact that they have a hydrophilic end and another hydrophobic end. In the present invention, the emulsifiers comprise at least sucrose esters and further comprise a compoud selected from mono and diglycerides of fatty acids, esters of the mono and diglycerides of fatty acids, sucroglycerides, polyglyceride esters of fatty acids or mixtures thereof.

The thickeners present in the product of the invention have the purpose of providing the desired texture and consistency. The percentage of thickeners according to the invention provides rheological characteristics to the product that make it suitable for its use as a margarine spread. The thickeners suitable for preparing the spread of the present invention are selected from locust bean gum, guar gum, tara gum, agar-agar, carrageenans, alginates, xanthan, gellan, high methoxyl (HM) pectins, low methoxyl (LM) pectins, microcrystalline cellulose (MCC), MCC-Na, methylcellulose, modified starches or mixtures thereof.

As an optional element, the spread of the invention can contain a preservative or antioxidant to prevent the oxidation and rancidity thereof. Both hydrophilic antioxidants, such as citric acid, potassium sorbate or ascorbic acid, and hydrophobic antioxidants, such as tocopherols, are contemplated among the preferred preservative and antioxidant components. When seed oils are used, the tocopherols contained therein will act as antioxidants in the product.

The present invention also contemplates the option of adding spices or other food ingredients, such as for example, garlic, onion, rosemary, etc.

The second object of the invention relates to the method for preparing the emulsified spread comprising:
a. Dissolving the emulsifiers and thickeners in water by means of stirring to form the continuous phase of the emulsion
b. Incorporating the olive oil (dispersed phase) on the continuous phase at a speed between 1500 to 6000 rpm in an emulsifier apparatus.

In a preferred embodiment of the invention, the emulsifiers and thickeners are dissolved in water at a temperature between 30 and 60ºC.

The speed of the emulsifier apparatus is an important factor in obtaining a correct emulsion. Obtaining an emulsified product with the characteristics suitable for its use as a spread according to the present invention can be done within a range of 1500 to 6000 rpm, although it is preferred to use a rate of 5000 to 5700 rpm and more preferably a rate around 5400 rpm.

In those embodiments in which a vegetable oil other than olive oil is included, the oil can be incorporated in the emulsifier apparatus at the same time or can be previously premixed such that the mixture of the oils is incorporated on the continuous phase.

Another aspect of the invention relates to the application of the spread. A preferred use of the spread of the invention is in food as a substituent of butters and margarines. These are less healthy fat sources, therefore the main use of the product of the invention is for spreading on pan, cookies, cakes and any type of food commonly used for spreading butters and margarines. In addition to this application as a spread, the spread of the invention can be used to cook and generally as a gastronomic element. When subjected to a heat source, the spread of the invention melts and acquires a liquid texture which makes it suitable for several culinary applications.

Another remarkable application of the product of the invention is the cosmetic use thereof. The spread of the invention can be used as an ingredient in the elaboration of creams, unguents, lotions, gels, shampoos and other products of the cosmetic industry.

The following examples serve to illustrate the invention.

### Example 1: preparation of the formulation F1, F2 and F3

Two formulations were prepared according to the invention with the following percentages of each element:
F1:
   80% extra virgin olive oil
   16.4% water
   3% sucrose ester
   0.4% xanthan gum
   0.2% guar gum
F2:
   75% extra virgin olive oil
   22.3% water
   2.5% sucrose ester
   0.2% xanthan gum
F3:
   85% extra virgin olive oil
   12.5% water
   2.5% sucrose ester

In the elaboration of spreads F1, F2 and F3 first a mix was made with all the powder components.

In the case of F1, sucrose ester, xanthan gum and guar gum were mixed; for F2, sucrose ester and xanthan gum were mixed; and for F3, only sucrose ester was used.

Then each of the "mixes" was dissolved in distilled water at 50ºC with stirring. A paste making up the continuous phase of the future emulsion was thus formed.

Finally, Blanqueta extra virgin olive oil (dispersed phase) was incorporated in the emulsifier apparatus at a controlled rate and at a stirring rate of 5400 rpm. In any of these formulations the olive oil can be partially or totally substituted with other vegetable oils such as the aforementioned ones. In formulations F1, F2 and F3 the olive oil can be substituted with sunflower oil, the product obtained has a whiter color than when using olive oil.

The obtained emulsions F1, F2 and F3 were subjected to a series of tests to determine their rheological characteristics.

### Example 2: rheological characterization

The flow curves at 30ºC were obtained for the rheological characterization. The developed formulations had a pseudoplastic behavior. The curves were adjusted to the Ostwald-de Waele model, the following values of n (flow index) and K (consistency index) being obtained:

| F1 | | | |
|---|---|---|---|
| | | Flow curves | |
| Sample | | (0 - 100 s⁻¹ in 300 s) | |
| | | n | K (Pa.sⁿ) |
| | | | |
| Formulation | Minimum | 0.16 | 62.9 |
| Guar 30ºC | Maximum | 0.21 | 76.8 |

| F2 | | | |
|---|---|---|---|
| | | Flow curves | |
| Sample | | (0 - 100 s⁻¹ in 300 s) | |
| | | n | K (Pa.sⁿ) |

| Formulat. | | | |
|---|---|---|---|
| 75% oil | Minimum | 0.2748 | 22.014 |
| 30ºC | Maximum | 0.2221 | 27.782 |

| F3 | | | |
|---|---|---|---|
| | | Flow curves | |
| Sample | | (0 - 100 s⁻¹ in 300 s) | |
| | | n | K (Pa.sⁿ) |

| Formulat. | | | |
|---|---|---|---|
| 85% oil | Minimum | 0.3189 | 20.128 |
| 30ºC | Maximum | 0.3191 | 22.112 |

The obtained values correspond to a product of consistency and plasticity suitable for its use as food spread. Furthermore, the product remains stable at room temperature, i.e., it does not need refrigeration.

## Claims

1. Olive oil spread, **characterized in that** it comprises between 70-85% olive oil, between 1-6% emulsifiers, between 0-2% thickeners and between 12.5-29% water, wherein the olive oil has not been subjected to any hydrogenation or hydroxylation treatment and wherein the emulsifiers comprise at least sucrose esters.

2. Spread according to claim 1, comprising between 75-80% olive oil, 2-5% emulsifiers, 0.2-1 % thickeners and 15-20% water.

3. Spread according to any of the previous claims, wherein the oil is selected from virgin olive oil, extra virgin olive oil, refined olive oil, olive oil or olive-pomace oil or mixtures thereof.

4. Spread according to any of the previous claims, wherein the olive oil is partially substituted with other vegetable oils selected from sunflower, corn, soybean, rapeseed or canola, safflower, peanut, avocado or cottonseed oil.

5. Spread according to any of the previous claims, wherein the emulsifiers further comprise a compound selected from mono and diglycerides of fatty acids, esters of the mono and diglycerides of fatty acids, sucroglycerides, polyglyceride esters of fatty acids or mixtures thereof.

6. Spread according to any of the previous claims, wherein the thickeners are selected from locust bean gum, guar gum, tara gum, agar-agar, carrageenans, alginates, xanthan, gellan, high methoxyl (HM) pectins, low methoxyl (LM) pectins, microcrystalline cellulose (MCC), MCC-Na, methylcellulose, modified starches or mixtures thereof.

7. Spread according to any of the previous claims, additionally comprising a preservative or antioxidant.

8. Spread according to any of the previous claims, additionally comprising spices or other food ingredients.

9. Method for preparing a spread according to claim 1, comprising:
i. Dissolving the emulsifiers and thickeners in water by means of stirring to form the continuous phase of the emulsion
ii. Incorporating the olive oil (dispersed phase) on the continuous phase at a speed between 1500 and 6000 rpm in an emulsifier apparatus.

10. Method according to claim 9, wherein the emulsifiers and thickeners are dissolved at a temperature between 30 and 60°C.

11. Use of a spread according to claim 1 for spreading on foods.

## Patentansprüche

1. Olivenölaufstrich, **dadurch gekennzeichnet, dass** er 70 bis 85% Olivenöl, 1 bis 6% Emulgatoren, 0 bis 2% Verdickungsmittel und 12,5 bis 29% Wasser umfasst, wobei das Olivenöl keiner Hydrierungs- oder Hydroxylierungsbehandlung unterzogen worden ist und wobei die Emulgatoren zumindest Saccharoseester umfassen.

2. Aufstrich nach Anspruch 1, der 75 bis 80% Olivenöl, 2 bis 5% Emulgatoren, 0,2 bis 1% Verdickungsmittel und 15 bis 20% Wasser umfasst.

3. Aufstrich nach einem der vorangegangenen Ansprüche, bei dem das Öl aus nativem Olivenöl, nativem Olivenöl extra, raffiniertem Olivenöl, Olivenöl oder Oliventresteröl oder Mischungen davon ausgewählt ist.

4. Aufstrich nach einem der vorangegangenen Ansprüche, bei dem das Olivenöl teilweise mit anderen pflanzlichen Ölen ausgewählt aus Sonnenblumen-, Mais-, Sojabohnen-, Raps-, Saflor-, Erdnuss-, Avocado- oder Baumwollsamenöl substituiert ist.

5. Aufstrich nach einem der vorangegangenen Ansprüche, bei dem die Emulgatoren weiterhin eine aus Mono- und Diglyceriden von Fettsäuren, Estern der Mono- und Diglyceride von Fettsäuren, Sucroglyceriden, Polyglyceridestern von Fettsäuren oder Mischungen davon ausgewählte Verbindung umfassen.

6. Aufstrich nach einem der vorangegangenen Ansprüche, bei dem die Verdickungsmittel aus Johannisbrotkernmehl, Guarkernmehl, Tarakernmehl, Agar-Agar, Carrageenen, Alginaten, Xanthan, Gellan, hochveresterten (HV) Pektinen, niederveresterten (NV) Pektinen, mikrokristalliner Cellulose (MCC), MCC-Na, Methylcellulose, modifizierten Stärken oder Mischungen davon ausgewählt sind.

7. Aufstrich nach einem der vorangegangenen Ansprüche, der zusätzlich ein Konservierungsmittel oder Antioxidans umfasst.

8. Aufstrich nach einem der vorangegangenen Ansprüche, das zusätzlich Gewürze oder andere Nahrungsbestandteile umfasst.

9. Verfahren zur Herstellung eines Aufstrichs nach Anspruch 1, das Folgendes umfasst:
i. Lösen der Emulgatoren und Verdickungsmittel in Wasser mittels Rühren, so dass die kontinuierliche Phase der Emulsion entsteht
ii. Einbringen des Olivenöls (dispergierte Phase) in die kontinuierliche Phase mit einer Drehzahl von 1500 bis 6000 UpM in einer Emulgiervorrichtung

10. Verfahren nach Anspruch 9, bei dem die Emulgatoren und Verdickungsmittel bei einer Temperatur von 30 bis 60 °C gelöst werden.

11. Verwendung eines Aufstrichs nach Anspruch 1 zum Aufstreichen auf Lebensmittel.

## Revendications

1. Pâte à tartiner à base d'huile d'olive, **caractérisée en ce qu'**elle comprend entre 70 et 85 % d'huile d'olive, entre 1 et 6 % d'émulsifiants, entre 0 et 2 % d'épaississants et entre 12,5 et 29 % d'eau, l'huile d'olive n'ayant pas été soumise à un traitement d'hydrogénation ou d'hydroxylation quelconque et les émulsifiants comprenant au moins des esters de saccharose.

2. Pâte à tartiner selon la revendication 1, comprenant entre 75 et 80 % d'huile d'olive, 2 à 5 % d'émulsifiants, 0,2 à 1 % d'épaississants et 15 à 20 % d'eau.

3. Pâte à tartiner selon l'une quelconque des revendications précédentes, l'huile étant choisie parmi de l'huile d'olive vierge, de l'huile d'olive extra-vierge, de l'huile d'olive raffinée, de l'huile d'olive ou de l'huile de marc d'olive ou des mélanges de celles-ci.

4. Pâte à tartiner selon l'une quelconque des revendications précédentes, dans laquelle l'huile d'olive est partiellement remplacée par d'autres huiles végétales choisies parmi l'huile de tournesol, de maïs, de soja, de colza ou de canola, de carthame, d'arachide, d'avocat ou de coton.

5. Pâte à tartiner selon l'une quelconque des revendications précédentes, les émulsifiants comprenant en outre un composé choisi parmi des mono- et diglycérides d'acides gras, des esters des mono- et diglycérides d'acides gras, des saccharoglycérides, des esters de polyglycéride d'acides gras ou des mélanges de ceux-ci.

6. Pâte à tartiner selon l'une quelconque des revendications précédentes, dans laquelle les épaississants sont choisis parmi la gomme de caroube, la gomme de guar, la gomme de tara, l'agar-agar, les carraghénines, les alginates, le xanthane, le gellane, les pectines riches en méthoxyle (HM), les pectines pauvres en méthoxyle (LM), la cellulose microcristalline (MCC), MCC-Na, la méthylcellulose, des amidons modifiés ou des mélanges de ceux-ci.

7. Pâte à tartiner selon l'une quelconque des revendications précédentes, comprenant en outre un conservateur ou un antioxydant.

8. Pâte à tartiner selon l'une quelconque des revendications précédentes, comprenant en outre des épices ou d'autres ingrédients alimentaires.

9. Procédé de préparation d'une pâte à tartiner selon la revendication 1, comprenant :
i. la dissolution des émulsifiants et des épaississants dans de l'eau au moyen d'une agitation pour former la phase continue de l'émulsion,
ii. l'incorporation de l'huile d'olive (phase dispersée) dans la phase continue à une vitesse comprise entre 1500 et 6000 tours/min dans un appareil d'émulsification.

10. Procédé selon la revendication 9, dans lequel les émulsifiants et les épaississants sont dissous à une température comprise entre 30 et 60°C.

11. Utilisation d'une pâte à tartiner selon la revendication 1, pour étalement sur des aliments.
